# EUROPÄISCHE PATENTANMELDUNG

(11) **EP 2 980 968 A1**
(43) Veröffentlichungstag der Anmeldung: **03.02.2016**
(21) Anmeldenummer: 14179502.1
(22) Anmeldetag: 01.08.2014
(51) Int. Cl.: H02K 9/12, H02K 9/18

(54) **Elektrische Maschine mit verbesserter Kühlung**

(71) Anmelder: Siemens Aktiengesellschaft, 80333 München (DE)
(72) Erfinder: Granat, Gerd, 94107 Untergriesbach (DE); Putz, Walter, 94060 Pocking (DE)

(57) **Zusammenfassung**

Die Erfindung betrifft eine elektrische Maschine umfassend einen hohlzylinderförmigen Stator (1), einen im Stator (1) um eine Rotationsachse (2) drehbar gelagerten Rotor (3) und einen Wärmetauscher (4), welcher sich in axialer Richtung zumindest entlang der axialen Länge des Stators (1) erstreckt und welcher sich in Umfangsrichtung höchstens entlang der Hälfte des Umfangs des Stators (1) erstreckt, wobei mittels des Wärmetauschers (4) ein zur Kühlung des Stators (1) und/oder des Rotors (3) vorgesehenes, erstes Kühlmedium kühlbar ist. Um eine elektrische Maschine mit einer verbesserten Kühlung bereitzustellen, wird vorgeschlagen, dass der Wärmetauscher (4) Rohre (5) aufweist, durch welche ein zweites Kühlmedium im Wesentlichen in Umfangsrichtung führbar ist, wobei der Wärmetauscher (4) zumindest abschnittsweise derart ausgestaltet ist, dass das erste Kühlmedium zwischen den Rohren (5) im Wesentlichen senkrecht zur axialen Richtung und senkrecht zu den Rohren (5) führbar ist.

## Beschreibung

Die Erfindung betrifft eine elektrische Maschine umfassend einen hohlzylinderförmigen Stator, einen im Stator um eine Rotationsachse drehbar gelagerten Rotor und einen Wärmetauscher, welcher sich in axialer Richtung zumindest entlang der axialen Länge des Stators erstreckt und welcher sich in Umfangsrichtung höchstens entlang der Hälfte des Umfangs des Stators erstreckt, wobei mittels des Wärmetauschers ein zur Kühlung des Stators und/oder des Rotors vorgesehenes, erstes Kühlmedium kühlbar ist.

Eine derartige elektrische Maschine kommt beispielsweise als luftgekühlte elektrische Maschine zum Einsatz. Solche Maschinen werden oftmals entweder mit Hilfe eines fremd- oder selbstbelüfteten Kühlkreislaufes betrieben.

Aus der DE 10 2010 002 068 A1 ist eine Motoreinheit bekannt, welche einen Motor und einen Wärmetauscher umfasst.

Der Erfindung liegt die Aufgabe zugrunde, eine elektrische Maschine mit einer verbesserten Kühlung bereitzustellen.

Diese Aufgabe wird durch eine elektrische Maschine der eingangs genannten Art dadurch gelöst, dass der Wärmetauscher Rohre aufweist, durch welche ein zweites Kühlmedium im Wesentlichen in Umfangsrichtung führbar ist, wobei der Wärmetauscher zumindest abschnittsweise derart ausgestaltet ist, dass das erste Kühlmedium zwischen den Rohren im Wesentlichen senkrecht zur axialen Richtung und senkrecht zu den Rohren führbar ist.

Der Wärmetauscher ermöglicht dank seiner Ausgestaltung einen guten Wärmetransfer von Abwärme aus dem ersten Kühlmedium zum zweiten Kühlmedium, wobei die Abwärme während des Betriebs der elektrischen Maschine entsteht und vom ersten Kühlmedium aufgenommen werden kann. Dabei ist der Wärmetauscher derart ausgestaltet, dass das erste Kühlmedium an den Rohren vorbei und um die Rohre herum geleitet wird und dabei im Wesentlichen senkrecht zur axialen Richtung und senkrecht zu den Rohren führbar ist. Durch die Rohre wird das zweite Kühlmedium geführt, wobei die Rohre im Wesentlichen in Umfangsrichtung ausgerichtet sind. Damit ist gemeint, dass das zweite Kühlmedium, welches in eines der Rohre eindringt und schließlich aus diesem Rohr wieder herausströmt im Wesentlichen in Umfangsrichtung geführt wird, was beispielsweise durch in etwa kreisbogenförmig oder in etwa geradlinig ausgestaltete Rohre erreicht werden kann.

Zur Veranschaulichung kann man sich die elektrische Maschine und den Wärmetauscher in einem kartesischen Koordinatensystems derart vorstellen, dass die Rotationsachse entlang der x-Achse des Koordinatensystems ausgerichtet ist, wobei der Wärmetauscher in y-Richtung versetzt im Anschluss an den Stator angeordnet ist und die Rohre im Wesentlichen in z-Richtung verlaufen. Wie schon erläutert, können die Rohre dabei in etwa kreisbogenförmig oder in etwa geradlinig entlang der z-Achse ausgestaltet sein. Entsprechend wird das erste Kühlmedium innerhalb des Wärmetauschers im Wesentlichen in radialer Richtung oder in y-Richtung geführt. Beispielsweise kann der Wärmetauscher im Wesentlichen quaderförmig ausgestaltet sein, wobei der Quader auf den Stator oder auf ein Gehäuse, in welchem der Stator angeordnet ist, aufgesetzt ist.

Besonders vorteilhaft an dem vorgeschlagenen Wärmetauscher ist dabei, dass das erste Kühlmedium entlang der Maschinenachse gleichmäßig gekühlt werden kann, wodurch Stellen mit Hitzestau zuverlässig vermieden werden können. Derartige Stellen können ansonsten im Bereich der axialen Mitte der elektrischen Maschine auftreten und rühren oftmals daher, dass ein Kühlmedium lediglich in axialer Richtung durch die elektrische Maschine geführt wird und sich dabei zunehmend erhitzt. Im Gegensatz dazu ermöglicht der vorgeschlagene Wärmetauscher jedoch, dem Rotor und/oder dem Stator bezüglich der axialen Richtung gleichmäßig rückgekühltes erstes Kühlmedium und vom Rotor und/oder vom Stator erwärmtes erstes Kühlmedium gleichmäßig bezüglich der axialen Richtung rückzukühlen. Dies wird insbesondere dadurch erreicht, dass sowohl das erste Kühlmedium als auch das zweite Kühlmedium im Wesentlichen senkrecht zur axialen Richtung sowie im Wesentlichen senkrecht zueinander durch den Wärmetauscher geführt werden.

Insbesondere bei elektrische Maschinen mit vergleichsweise großen elektrischen Leistungen bzw. vergleichsweise großen Achshöhen, deren axiale Erstreckung üblicherweise größer als der Durchmesser des jeweiligen Stators ist, bietet der vorgeschlagene Wärmetauscher zusätzlich den Vorteil, dass die Querschnittsfläche, welche zur Hindurchführung des zweiten Kühlmediums durch den Wärmetauscher zur Verfügung steht, vergleichsweise groß ist. Insbesondere weist der Stator, gegebenenfalls inklusive der aus dem Stator herausragenden Wickelköpfe, von derartigen elektrischen Maschinen in x-Richtung eine größere Erstreckung als in Richtung auf. Vorzugsweise sind die Abmessungen des Wärmetauschers derart gewählt, dass sich der Wärmetauscher in axialer bzw. x-Richtung entlang der axialen Erstreckung der elektrischen Maschine bzw. des Stators erstreckt und sich in Umfangsrichtung bzw. in z-Richtung entlang der Erstreckung der elektrischen Maschine bzw. des Stators in z-Richtung erstreckt. Der vorgeschlagene Wärmetauscher ermöglicht somit mit vergleichsweise einfachen technischen Mitteln, einen vergleichsweise großen Volumenstrom des zweiten Kühlmittels durch den Wärmetauscher zu führen, wodurch das erste Kühlmedium vergleichsweise stark rückgekühlt werden kann.

Für das erste Kühlmedium und/oder das zweite Kühlmedium kann beispielsweise Luft, Kühlwasser oder Öl gewählt werden. Dies ist insbesondere abhängig von der abzuführenden Wärme der elektrischen Maschine, zur Verfügung stehendem Bauraum und eventuell vorhandenen Versorgungsanschlüssen. Vorzugsweise wird dabei Luft, insbesondere in einem geschlossenen ersten Kühlkreislauf, als erstes Kühlmedium eingesetzt. Als zweites Kühlmedium kann ebenfalls Luft, vorteilhafterweise in einem offenen zweiten Kühlkreislauf, oder beispielsweise Kühlwasser, welches über entsprechende Versorgungsleitungen zu- und abgeführt wird, verwendet werden.

Bei einer vorteilhaften Ausgestaltung der Erfindung ist die elektrische Maschine derart ausgestaltet, dass das erste Kühlmedium fluiddicht vom zweiten Kühlmedium abgetrennt ist.

Die fluiddichte Trennung der beiden Kühlmedien ermöglicht einen besonders guten Explosionsschutz. Dadurch kann insbesondere zuverlässig verhindert werden, dass zündfähiger Staub in Bereiche der elektrischen Maschine mit Hochspannung, insbesondere nahe dem Stator und gegebenenfalls dem Rotor, eindringen kann. Die fluiddichte Trennung kann beispielsweise dadurch erreicht werden, dass ein erster Kühlkreislauf, in welchem das erste Kühlmedium geführt wird, sowie das restliche Gehäuse geschlossen ausgeführt werden.

Bei einer weiteren vorteilhaften Ausgestaltung der Erfindung weist die elektrische Maschine ein Wärmetauschergehäuse auf, welches in Umfangsrichtung einen mittigen und zwei stirnseitige Umfangsabschnitte aufweist, wobei der Wärmetauscher im mittigen Umfangsabschnitt angeordnet ist, wobei die elektrische Maschine derart ausgestaltet ist, dass das zweite Kühlmedium
- an dem einen stirnseitigen Umfangsabschnitt einer ersten Stirnseite der Rohre zuführbar ist,
- von der ersten Stirnseite der Rohre im Wesentlichen in Umfangsrichtung durch die Rohre zu einer zweiten Stirnseite der Rohre führbar ist und
- an den anderen stirnseitigen Umfangsabschnitt von der zweiten Stirnseite der Rohre abführbar ist.

Der oben erläuterten Veranschaulichung der elektrischen Maschine im kartesischen Koordinatensystem folgend ist der mittige Umfangsabschnitt in z-Richtung somit zwischen den beiden stirnseitigen Umfangsabschnitten angeordnet. Dabei kann das zweite Kühlmedium an dem einen stirnseitigen, beispielsweise einem ersten stirnseitigen Umfangsabschnitt den Rohren bzw. der ersten Stirnseite der Rohre zugeführt werden und an dem anderen stirnseitigen, beispielsweise einem zweiten stirnseitigen Umfangsabschnitt von den Rohren bzw. der zweiten Stirnseite der Rohre abgeführt werden.

Beispielsweise kann das Wärmetauschergehäuse derart ausgestaltet sein, dass ein zweiter Kühlkreislauf, in welchem das zweite Kühlmedium spekuliert, geschlossen ausgeführt ist und beispielsweise ein Rückkühlelement im zweiten Kühlkreislauf vorgesehen ist. Alternativ kann der zweite Kühlkreislauf auch offen ausgestaltet sein.

Insbesondere kann dabei eine Umkehr des Volumenstroms des zweiten Kühlmediums vorgesehen sein, so dass das zweite Kühlmedium im zweiten stirnseitigen Umfangsabschnitt den Rohren zuführbar und im ersten stirnseitigen Umfangsabschnitt von den Rohren abführbar ist.

Das Wärmetauschergehäuse ist dabei derart ausgestaltet, dass das erste Kühlmedium vom Stator und/oder vom Rotor zum Wärmetauscher führbar ist bzw. umgekehrt, wozu entsprechend ausgestaltete Kanäle oder Aussparungen zur Führung des ersten Kühlmediums vorgesehen sind.

Bei einer weiteren vorteilhaften Ausgestaltung der Erfindung weist die elektrische Maschine dabei eine erste Strömungsmaschine zur Umwälzung des zweiten Kühlmediums auf, wobei die erste Strömungsmaschine in dem einen stirnseitigen Umfangsabschnitt angeordnet ist.

Die erste Strömungsmaschine kann als Axial-Strömungsmaschine ausgestaltet sein, welche beispielsweise in z-Richtung zu den Rohren versetzt und bezüglich des Volumenstroms des zweiten Kühlmediums stromaufwärts der Rohre angeordnet ist. Vorzugsweise ist die erste Strömungsmaschine jedoch als Radial-Strömungsmaschine ausgestaltet, welche in y-Richtung zum Wärmetauscher versetzt derart angeordnet ist, dass mittels der Radial-Strömungsmaschine ein Volumenstrom in y-Richtung erzeugbar ist, welcher auf Höhe der Rohre gegebenenfalls mittels des Wärmetauschergehäuses oder mittels geeignet ausgestalteter erster Umlenkelemente in z-Richtung in die Rohre umlenkbar ist.

Bei einer weiteren vorteilhaften Ausgestaltung der Erfindung weist die elektrische Maschine dabei eine zweite Strömungsmaschine zur Umwälzung des zweiten Kühlmediums auf, wobei die zweite Strömungsmaschine in dem anderen stirnseitigen Umfangsabschnitt angeordnet ist.

Die zweite Strömungsmaschine kann als Axial-Strömungsmaschine ausgestaltet sein, welche beispielsweise in z-Richtung zu den Rohren versetzt und bezüglich des Volumenstroms des zweiten Kühlmediums stromabwärts der Rohre angeordnet ist. Vorzugsweise ist die zweite Strömungsmaschine jedoch als Radial-Strömungsmaschine ausgestaltet, welche in y-Richtung zum Wärmetauscher versetzt angeordnet ist und mittels welcher ein umgekehrter Volumenstrom des zweiten Kühlmediums, also vom zweiten stirnseitigen Umfangsabschnitt zum ersten stirnseitigen Umfangsabschnitt, bewirkbar ist. Mittels der Radial-Strömungsmaschine ist somit ein Volumenstrom in y-Richtung erzeugbar, welcher auf Höhe der Rohre gegebenenfalls mittels des Wärmetauschergehäuses oder mittels geeignet ausgestalteter zweiter Umlenkelemente in z-Richtung in die Rohre umlenkbar ist.

Bei einer weiteren vorteilhaften Ausgestaltung der Erfindung ist die elektrische Maschine dabei derart ausgelegt, dass bei einem Ausfall der ersten Strömungsmaschine die zweite Strömungsmaschine betrieben wird und umgekehrt.

Vorzugsweise sind die erste Strömungsmaschine und die zweite Strömungsmaschine dabei jeweils als Radial-Strömungsmaschinen ausgestaltet, wie oben erläutert. Insbesondere ist mittels der ersten Strömungsmaschine ein Volumenstrom des zweiten Kühlmediums vom ersten stirnseitigen Umfangsabschnitt in den zweiten stirnseitigen Umfangsabschnitt und mittels der zweiten Strömungsmaschine ein Volumenstrom des zweiten Kühlmediums vom zweiten stirnseitigen Umfangsabschnitt in den ersten stirnseitigen Umfangsabschnitt bewirkbar. Vorzugsweise werden die erste Strömungsmaschine und die zweite Strömungsmaschine deshalb nicht gleichzeitig betrieben. Vielmehr wird die erste bzw. zweite Strömungsmaschine lediglich dann betrieben, wenn die zweite bzw. erste Strömungsmaschine ausfällt oder aktuell nicht betrieben wird.

Mittels einer derartig ausgestalteten elektrischen Maschine wird somit eine Redundanz bezüglich der ersten und der zweiten Strömungsmaschine realisiert. Dies erlaubt eine besonders zuverlässige Aufrechterhaltung des Volumenstroms des zweiten Kühlmediums und somit der Kühlung der elektrischen Maschine, was insbesondere bei elektrischen Maschinen, an welche besonders hohe Ansprüche bezüglich der Verfügbarkeit gestellt werden, von großem Vorteil ist.

Die vorgeschlagene elektrische Maschine kann insbesondere modular aufgebaut und zweiflutig ausgeführt werden und insbesondere eine Luft-Luft-Kühlung aufweisen. Eine derartige Ausführung ist insbesondere für drehrichtungsneutrale und für sehr langsam drehende Maschinen sehr gut geeignet.

Prinzipiell kann die erwähnte Redundanz jedoch auch dadurch erreicht werden, dass die erste Strömungsmaschine und/oder die zweite Strömungsmaschine als Axial-Strömungsmaschine ausgestaltet ist, wie weiter oben erläutert.

Vorzugsweise sind die erste Strömungsmaschine und die zweite Strömungsmaschine dabei derart ausgestaltet, dass sie eine Strömung des zweiten Kühlmediums möglichst wenig abbremsen, für den Fall, dass sie selbst nicht betrieben werden, sondern die jeweils andere Strömungsmaschine betrieben wird.

Bei einer weiteren vorteilhaften Ausgestaltung der Erfindung weist das Wärmetauschergehäuse dabei in dem einen stirnseitigen Umfangsabschnitt zumindest eine erste Öffnung und in dem anderen stirnseitigen Umfangsabschnitt zumindest eine zweite Öffnung auf, wobei die erste Strömungsmaschine zwischen der jeweiligen ersten Öffnung und der ersten Stirnseite der Rohre angeordnet ist und/oder die zweite Strömungsmaschine zwischen der jeweiligen zweiten Öffnung und der zweiten Stirnseite der Rohre angeordnet ist.

Anhand der jeweiligen Öffnung des Wärmetauschergehäuses kann das zweite Kühlmedium in das Wärmetauschergehäuse eindringen bzw. das Wärmetauschergehäuse verlassen. Vorzugsweise sind die erste Strömungsmaschine und die zweite Strömungsmaschine dabei jeweils als Radial-Strömungsmaschine ausgeführt.

Bei einer weiteren vorteilhaften Ausgestaltung der Erfindung weist die elektrische Maschine dabei ein im Wesentlichen quaderförmiges Gehäuse auf, in welchem der Stator und der Rotor angeordnet sind, wobei das Wärmetauschergehäuse in radialer Richtung an eine der Seitenflächen des quaderförmigen Gehäuses anschließend angeordnet ist.

Vorzugsweise weisen sowohl das Gehäuse als auch das Wärmetauschergehäuse geeignet ausgestaltete Aussparungen auf, so dass eine Zirkulation des ersten Kühlmediums vom Rotor und/oder vom Stator zum Wärmetauscher bzw. umgekehrt ermöglicht wird.

Bei einer weiteren vorteilhaften Ausgestaltung der Erfindung weist der Wärmetauscher in axialer Richtung einen mittigen und zwei stirnseitige Axialabschnitte auf, wobei die elektrische Maschine derart ausgestaltet ist, dass das erste Kühlmedium
- vom Rotor und/oder vom Stator im Wesentlichen nach radial außen durch den mittigen Axialabschnitt zu einer Außenseite des mittigen Axialabschnitts führbar ist,
- von der Außenseite des mittigen Axialabschnitts im Wesentlichen in axialer Richtung zu einer Außenseite des jeweiligen stirnseitigen Axialabschnitts führbar ist und
- von der Außenseite des jeweiligen stirnseitigen Axialabschnitts im Wesentlichen nach radial innen durch den jeweiligen stirnseitigen Axialabschnitt zu einer jeweiligen Stirnseite des Rotors und/oder des Stators führbar ist.

Ein derart ausgestalteter Wärmetauscher ermöglicht, das erste Kühlmedium besonders wirkungsvoll zu kühlen, da das erste Kühlmedium im mittigen Axialabschnitt nach radial außen und anschließend in einem der beiden stirnseitigen Axialabschnitte nach radial innen durch den Wärmetauscher geführt werden kann. Dabei kann das erste Kühlmedium die vom Rotor und/oder vom Stator aufgenommene Abwärme innerhalb des Wärmetauschers über die Rohre an das zweite Kühlmedium abgeben. Das erste Kühlmedium kann somit ein erstes Mal abgekühlt werden, während es nach radial außen durch den Wärmetauscher geführt wird, und anschließend ein zweites Mal abgekühlt werden, während es nach radial innen durch den Wärmetauscher geführt wird. Vorzugsweise ist die elektrische Maschine dabei derart ausgestaltet, dass das erste Kühlmedium in einem geschlossenen, ersten Kühlkreislauf geführt wird.

Prinzipiell ist dabei auch eine umgekehrte Strömungsrichtung des ersten Kühlmediums denkbar, so dass das erste Kühlmedium im mittigen Axialabschnitt nach radial innen und in den beiden Stirnseiten liegen Axialabschnitten nach radial außen führbar ist.

Bei einer weiteren vorteilhaften Ausgestaltung der Erfindung weist der Wärmetauscher dabei jeweilige Trennelemente auf, mittels derer das durch den mittigen Axialabschnitt strömende erste Kühlmedium vom durch den jeweiligen stirnseitigen Axialabschnitt strömenden ersten Kühlmedium abtrennbar ist.

Mittels des jeweiligen Trennelements kann die Kühlleistung des Wärmetauschers weiter erhöht werden, indem ein strömungstechnischer Kurzschluss verhindert wird und vielmehr sichergestellt wird, dass das erste Kühlmedium den Wärmetauscher entlang seiner kompletten radialen Erstreckung durchströmt.

Bei einer weiteren vorteilhaften Ausgestaltung der Erfindung weist die elektrische Maschine dabei eine dritte Strömungsmaschine zur Umwälzung des ersten Kühlmediums auf, wobei die dritte Strömungsmaschine in radialer Verlängerung der Außenseite des mittigen Axialabschnitts angeordnet ist.

Vorzugsweise ist die dritte Strömungsmaschine als Radial-Strömungsmaschine ausgeführt, welche in y-Richtung zum mittigen Axialabschnitt versetzt bzw. beispielsweise im Bereich der axialen Mitte des oben erläuterten Wärmetauschergehäuses angeordnet ist. Mittels der Radial-Strömungsmaschine kann das erste Kühlmedium aus dem mittigen Axialabschnitt des Wärmetauschers angesaugt werden und in die jeweilige axiale Richtung zum jeweiligen stirnseitigen Axialabschnitt des Wärmetauschers ausgelassen werden.

Beispielsweise kann die elektrische Maschine zumindest eine Leiteinheit aufweisen, mittels welcher eine Strömung des ersten Kühlmediums vom Wärmetauscher zur dritten Strömungsmaschine bzw. von der dritten Strömungsmaschine zum Wärmetauscher leitbar ist. Vorzugsweise ist die jeweilige Leiteinheit mit den oben erläuterten Trennelementen den derart kombiniert, dass insgesamt ein Kurzschluss der Strömung des ersten Kühlmediums verhindert wird.

Bei einer weiteren vorteilhaften Ausgestaltung der Erfindung weist die elektrische Maschine dabei eine jeweilige vierte Strömungsmaschine zur Umwälzung des ersten Kühlmediums auf, wobei die jeweilige vierte Strömungsmaschine in radialer Verlängerung der Außenseite des jeweiligen stirnseitigen Axialabschnitts angeordnet ist.

Die jeweilige vierte Strömungsmaschine kann beispielsweise als Axial-Strömungsmaschine ausgestaltet sein, welche beispielsweise in y-Richtung zum jeweiligen stirnseitigen Axialabschnitt versetzt angeordnet ist. Bei der jeweiligen, vierten Strömungsmaschine handelt es sich jedoch vorzugsweise um eine Radial-Strömungsmaschine, welche derart angeordnet ist, dass das erste Kühlmedium von der axialen Mitte angesaugt werden kann und in im Wesentlichen radialer Richtung bzw. in y-Richtung zurück zum jeweiligen stirnseitigen Axialabschnitt und schließlich zum Stator und/oder zum Rotor ausgelassen werden kann.

Bei einer weiteren vorteilhaften Ausgestaltung der Erfindung ist die elektrische Maschine dabei derart ausgelegt, dass bei einem Ausfall der dritten Strömungsmaschine die jeweilige vierte Strömungsmaschine betrieben wird und umgekehrt.

Vorzugsweise sind die dritte Strömungsmaschine und die jeweilige vierte Strömungsmaschine dabei jeweils als Radial-Strömungsmaschinen ausgestaltet, wie oben erläutert. Mittels einer derartigen ausgestalteten elektrischen Maschine wird somit eine Redundanz bezüglich der dritten und der vierten Strömungsmaschinen realisiert. Dies erlaubt eine besonders zuverlässige Aufrechterhaltung des Volumenstroms des ersten Kühlmediums und somit der Kühlung der elektrischen Maschine, was insbesondere bei elektrischen Maschinen, an welche besonders hohe Ansprüche bezüglich der Verfügbarkeit gestellt werden, von großem Vorteil ist.

Die vorgeschlagene elektrische Maschine kann insbesondere modular aufgebaut und zweiflutig ausgeführt werden und insbesondere eine Luft-Luft-Kühlung aufweisen. Eine derartige Ausführung ist insbesondere für drehrichtungsneutrale und für sehr langsam drehende Maschinen sehr gut geeignet.

Prinzipiell kann die erwähnte Redundanz jedoch auch dadurch erreicht werden, dass die vierte Strömungsmaschine und/oder die jeweilige vierte Strömungsmaschine als Axial-Strömungsmaschine ausgestaltet ist, wie weiter oben erläutert.

Bei einer weiteren vorteilhaften Ausgestaltung der Erfindung weist die elektrische Maschine dabei eine jeweilige Leitvorrichtung auf, mittels welcher jeweils das erste Kühlmedium zu einer jeweiligen Stirnseite des Rotors und/oder des Stators führbar ist.

Vorzugsweise ist die jeweilige Leitvorrichtung derart ausgestaltet, dass die zu kühlenden Bereiche des Rotors und/oder des Stators ausreichend mit einer Strömung des ersten Kühlmediums versorgbar sind. Beispielsweise weist der Rotor axial verlaufende Rotorkanäle auf, insbesondere in Form von Zwischenräumen zwischen Stegen einer Stegwelle, welche mittels der jeweiligen Leitvorrichtung versorgt werden können. Das axial eingebrachte erste Kühlmedium kann insbesondere über nach radial außen offene Rotorkanäle wieder aus dem Rotor austreten.

Der Stator weist insbesondere axial herausragende Wickelköpfe auf, welche mittels der jeweiligen Leitvorrichtung mit genügend erstem Kühlmedium versorgbar sind, wobei insbesondere Statorkanäle vorgesehen sein können, welche sich in radialer Richtung an die nach radial außen offenen Rotorkanäle anschließen.

Bei einer weiteren vorteilhaften Ausgestaltung der Erfindung ist die elektrische Maschine mit einer elektrischen Leistung von zumindest 1 MW, insbesondere mehr als 3 MW, betreibbar, wobei die elektrische Maschine eine Achshöhe von zumindest 500 mm, insbesondere mehr als 630 mm, aufweist, und/oder wobei die elektrische Maschine als Generator, insbesondere Windkraftgenerator, oder als Antriebsmotor für einen Pumpenantrieb, einen Kompressorantrieb oder einen Stahlwerksantrieb ausgestaltet ist.

Im Folgenden wird die Erfindung anhand der in den Figuren dargestellten Ausführungsbeispiele näher beschrieben und erläutert. Es zeigen:
- FIG 1: einen Längsschnitt eines ersten Ausführungsbeispiels der erfindungsgemäßen elektrischen Maschine,
- FIG 2: einen Querschnitt des ersten Ausführungsbeispiels,
- FIG 3: einen Längsschnitt eines zweiten Ausführungsbeispiels der erfindungsgemäßen elektrischen Maschine, und
- FIG 4: einen Querschnitt des zweiten Ausführungsbeispiels.

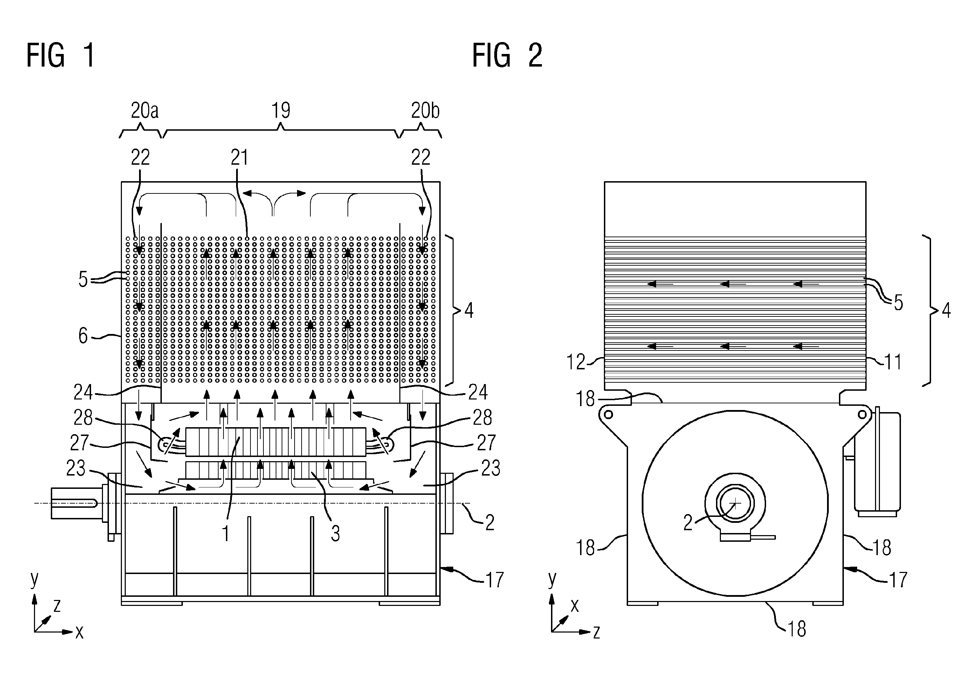

Figur 1 zeigt einen Längsschnitt eines ersten Ausführungsbeispiels der erfindungsgemäßen elektrischen Maschine. Die elektrische Maschine weist einen Stator 1 und einen im Stator 1 um eine Rotationsachse 2 drehbar gelagerten Rotor 3 auf, welche in einem Gehäuse 17 angeordnet sind. An den axialen Enden des Stators 1 ragen Wickelköpfe 28 aus dem Stator 1 heraus. Im Rahmen des Ausführungsbeispiels weist der Rotor 3 eine Stegwelle und radial nach außen führende Kühlkanäle auf, welche ihre Fortsetzung im Stator finden und durch welche ein erstes Kühlmedium zur Kühlung des Stators 1 und des Rotors 3 führbar ist.

Zur Kühlung des Stators 1 und des Rotors 3 weist die elektrische Maschine einen Wärmetauscher 4 auf, welcher in axialer Richtung betrachtet eine größere Erstreckung als der Stator 1 aufweist. Nimmt man an, dass die Rotationsachse 2 entlang einer x-Achse eines kartesischen Koordinatensystems ausgerichtet ist, so befindet sich der Wärmetauscher 4 in y-Richtung versetzt im Anschluss an das Gehäuse 17. In Umfangsrichtung erstreckt sich der Wärmetauscher 4 entlang etwa eines Viertels des Umfangs des Stators 1. Der Wärmetauscher 4 weist Rohre 5 auf, durch welche ein zweites Kühlmedium im Wesentlichen in Umfangsrichtung führbar ist, was in der Figur 2 noch näher dargestellt ist. Die Rohre 5 sind dabei im Wesentlichen in z- Richtung ausgerichtet, so dass der Wärmetauscher 4 derart ausgestaltet ist, dass das erste Kühlmedium zwischen den Rohren 5 im Wesentlichen senkrecht zur axialen Richtung und senkrecht zu den Rohren 5 führbar ist.

Während des Betriebs der elektrischen Maschine gemäß dem ersten Ausführungsbeispiel ist dabei folgender Kühlkreislauf für das erste Kühlmedium vorgesehen. Das erste Kühlmedium wird an beiden axialen Stirnseiten 23 des Rotors 3 bzw. des Stators 1 dem Rotor 3 und dem Stator 1 samt dem jeweiligen Wickelkopf 28 zugeführt, wobei zur Führung des ersten Kühlmediums und zur Unterbindung eines strömungstechnischen Kurzschlusses jeweils eine Leitvorrichtung 27 zum Einsatz kommt. Das erste Kühlmedium strömt zwischen den Stegen der Stegwelle des Rotors 3 zur axialen Mitte und kann über die erwähnten Kühlkanäle im Rotor 3 und im Stator 1 nach radial außen strömen. Ein Teil des ersten Kühlmediums wird an den Wickelköpfen 28 vorbeigeleitet, so dass insgesamt der Rotor 3 und der Stator 1 inklusive der Wickelköpfe 28 gekühlt werden können, indem sie ihre Abwärme an das erste Kühlmedium abgeben.

Anschließend strömt das erste Kühlmedium durch geeignet ausgestaltete Durchgänge vom Gehäuse 17 in ein Wärmetauschergehäuse 6, in welchem der Wärmetauscher 4 angeordnet ist. Das erste Kühlmedium wird in y-Richtung an den Rohren 5 eines mittigen Axialabschnitts 19 des Wärmetauschers 4 vorbeigeführt, wodurch das erste Kühlmedium mittels des in den Rohren 5 strömenden zweiten Kühlmediums rückgekühlt wird. Nachdem das erste Kühlmedium den mittigen Axialabschnitt 19 in y-Richtung nach außen durchströmt hat, erreicht das erste Kühlmedium die Außenseite 21 des mittigen Axialabschnitts 19 und wird in axialer Richtung zu den beiden axialen Stirnseiten umgelenkt, um anschließend von einer jeweiligen Außenseite 22 eines jeweiligen stirnseitigen Axialabschnitts 20a, 20b des Wärmetauschers 4 in y-Richtung nach innen durch den jeweiligen stirnseitigen Axialabschnitt 20a, 20b zu strömen. Dabei wird die Strömung des ersten Kühlmediums im mittigen Axialabschnitt 21 von der Strömung des ersten Kühlmediums im jeweiligen stirnseitigen Axialabschnitt 20a, 20b mittels eines jeweiligen Trennelements 24 abgetrennt, wodurch ein strömungstechnischer Kurzschluss unterbunden wird.

Das erste Kühlmedium wird nach dem vollständigen Durchströmen des Wärmetauschers 4 wiederum durch geeignet ausgestaltete Durchgänge vom Wärmetauschergehäuse 6 in das Gehäuse 17 geleitet, um schließlich anhand der jeweiligen Leitvorrichtung 27 wieder dem Rotor 3 und dem Stator 1 samt dem jeweiligen Wickelkopf 28 zugeführt zu werden.

Zur Umwälzung des ersten Kühlmediums kann zumindest eine Strömungsmaschine vorgesehen werden, welche beispielsweise im Gehäuse 17 im Bereich der jeweiligen Stirnseite 23 des Rotors 3 oder im Wärmetauschergehäuse 6 angeordnet ist und als Axial-Strömungsmaschine ausgestaltet sein kann.

Figur 2 zeigt einen Querschnitt des ersten Ausführungsbeispiels. Gleiche Bezugszeichen wie in Figur 1 bezeichnen dabei gleiche Gegenstände.

Wie schon erläutert, erstreckt sich der Wärmetauscher 4 in Umfangsrichtung entlang etwa eines Viertels des Umfangs des Stators 1, wobei die Rohre 5 im Rahmen des Ausführungsbeispiels im Wesentlichen in z-Richtung ausgerichtet sind. Alternativ können die Rohre 5 auch annähernd kreisbogenförmig ausgestaltet werden. Durch die Rohre 5 kann das zweite Kühlmedium von einer ersten Stirnseite 11 der Rohre 5 zu einer zweiten Stirnseite 12 der Rohre 5 und somit im Wesentlichen in Umfangsrichtung geführt werden.

Das Gehäuse 17 kann, wie in Figur 2 dargestellt, im Wesentlichen quaderförmig ausgeführt sein, wobei das Wärmetauschergehäuse 6 in radialer Richtung bzw. in y-Richtung an eine der Seitenflächen 18 des quaderförmigen Gehäuses 17 anschließend angeordnet ist.

Zur Umwälzung des zweiten Kühlmediums kann zumindest eine Strömungsmaschine vorgesehen werden, welche beispielsweise strömungstechnisch vor der ersten Stirnseite 11 bzw. strömungstechnisch nach der zweiten Stirnseite 12 der Rohre 5 angeordnet ist und als Axial-Strömungsmaschine ausgestaltet sein kann.

Prinzipiell kann auch eine umgekehrte Strömungsrichtung des ersten Kühlmediums und/oder des zweiten Kühlmediums vorgesehen werden.

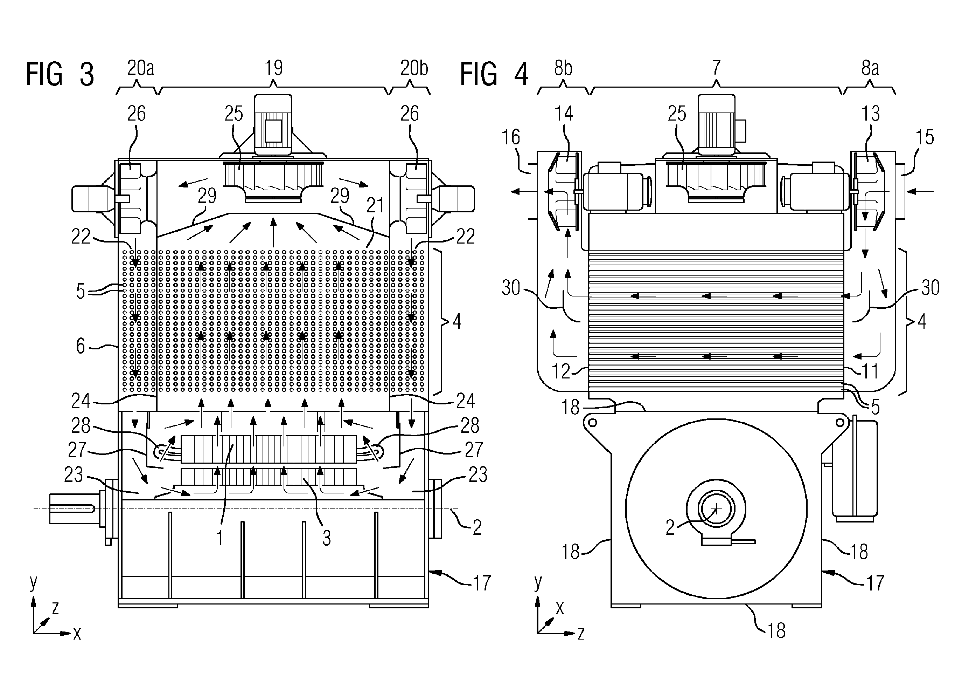

Figur 3 zeigt einen Längsschnitt eines zweiten Ausführungsbeispiels der erfindungsgemäßen elektrischen Maschine. Das zweite Ausführungsbeispiel weist mehrere Gemeinsamkeiten mit dem ersten Ausführungsbeispiel auf, so dass im Folgenden einige Unterschiede des zweiten Ausführungsbeispiels zum ersten Ausführungsbeispiel erläutert werden.

Zur Umwälzung des ersten Kühlmediums sind im Wärmetauschergehäuse 6 des zweiten Ausführungsbeispiels eine dritte Strömungsmaschine 25 in radialer Verlängerung der Außenseite 21 des mittigen Axialabschnitts 19 und jeweils eine vierte Strömungsmaschine 26 in radialer Verlängerung der Außenseite 22 des jeweiligen stirnseitigen Axialabschnitt 20a, 20b angeordnet. Mittels einer jeweiligen Leiteinheit 29 wird die Strömung des ersten Kühlmediums vom mittigen Axialabschnitt 19 das Wärmetauschers 4 zur dritten Strömungsmaschine 25 bzw. von der dritten Strömungsmaschine 25 über die jeweilige vierte Strömungsmaschine 26 zum jeweiligen stirnseitigen Axialabschnitt 20a, 20b des Wärmetauschers 4 geleitet. Die jeweilige Leiteinheit 29 und das jeweilige Trennelemente 24 sind derart ausgestaltet, dass ein Kurzschluss der Strömung des ersten Kühlmediums verhindert wird.

Die dritte Strömungsmaschine 25 und die jeweilige vierte Strömungsmaschine 26 sind jeweils als Radial-Strömungsmaschine ausgestaltet, so dass das erste Kühlmedium von der dritten Strömungsmaschine 25 im Wesentlichen in axialer bzw. x-Richtung und von der jeweiligen vierten Strömungsmaschine 26 im Wesentlichen in radialer bzw. y-Richtung ausgelassen wird.

Vorzugsweise ist die elektrische Maschine derart ausgelegt, dass bei einem Ausfall der dritten Strömungsmaschine 25 die jeweilige vierte Strömungsmaschine 26 betrieben wird und umgekehrt.

Figur 4 zeigt einen Querschnitt des zweiten Ausführungsbeispiels.

Das Wärmetauschergehäuse 6 weist einen mittigen Umfangsabschnitt 7 und zwei stirnseitige Umfangsabschnitte 8a, 8b, wobei die Rohre 5 des Wärmetauschers 4 im mittigen Umfangsabschnitt 7 angeordnet sind und wobei eine erste Öffnung 15 in dem einen stirnseitigen Umfangsabschnitt 8a und eine zweite Öffnung 16 in den anderen stirnseitigen Umfangsabschnitt 8b angeordnet sind. Zur Umwälzung des zweiten Kühlmediums sind in dem einen stirnseitigen Umfangsabschnitt 8a eine erste Strömungsmaschine 13 und in dem anderen stirnseitigen Umfangsabschnitt 8b eine zweite Strömungsmaschine 14 angeordnet. Dabei ist das zweite Kühlmedium in dem einen stirnseitigen Umfangsabschnitt 8a der ersten Stirnseite 11 der Rohre 5 zuführbar und an dem anderen stirnseitigen Umfangsabschnitt 8b von der zweiten Stirnseite 12 der Rohre 5 abführbar.

Die erste Strömungsmaschine 13 und die jeweilige zweite Strömungsmaschine 14 sind jeweils als Radial-Strömungsmaschinen ausgestaltet, so dass das zweite Kühlmedium von der ersten Strömungsmaschine 13 und der zweiten Strömungsmaschine 14 jeweils im Wesentlichen in radialer bzw. y-Richtung ausgelassen wird. Im jeweiligen stirnseitigen Umfangsabschnitt 8a, 8b weist das Wärmetauschergehäuse 6 jeweils zumindest ein Umlenkelement 30 zur Umlenkung des zweiten Kühlmediums auf, mittels welchem das zweite Kühlmedium von der ersten Strömungsmaschine 13 in z-Richtung in die Rohre 5 bzw. von den Rohren 5 in y-Richtung zur jeweiligen zweiten Strömungsmaschine 14 umlenkbar ist.

Beispielsweise wird lediglich die erste Strömungsmaschine 13 oder die zweite Strömungsmaschine 14 betrieben, wobei vorzugsweise die elektrische Maschine derart ausgelegt ist, dass bei einem Ausfall der ersten Strömungsmaschine 13 zweite Strömungsmaschine 14 betrieben wird und umgekehrt.

Prinzipiell kann auch eine umgekehrte Strömungsrichtung des ersten Kühlmediums und/oder des zweiten Kühlmediums vorgesehen werden. Insbesondere können eine oder mehrere der erläuterten Strömungsmaschinen auch als Axial-Strömungsmaschinen ausgestaltet sein.

Zusammenfassend betrifft die Erfindung eine elektrische Maschine umfassend einen hohlzylinderförmigen Stator, einen im Stator um eine Rotationsachse drehbar gelagerten Rotor und einen Wärmetauscher, welcher sich in axialer Richtung zumindest entlang der axialen Länge des Stators erstreckt und welcher sich in Umfangsrichtung höchstens entlang der Hälfte des Umfangs des Stators erstreckt, wobei mittels des Wärmetauschers ein zur Kühlung des Stators und/oder des Rotors vorgesehenes, erstes Kühlmedium kühlbar ist. Um eine elektrische Maschine mit einer verbesserten Kühlung bereitzustellen, wird vorgeschlagen, dass der Wärmetauscher Rohre aufweist, durch welche ein zweites Kühlmedium im Wesentlichen in Umfangsrichtung führbar ist, wobei der Wärmetauscher zumindest abschnittsweise derart ausgestaltet ist, dass das erste Kühlmedium zwischen den Rohren im Wesentlichen senkrecht zur axialen Richtung und senkrecht zu den Rohren führbar ist.

## Patentansprüche

1. Elektrische Maschine umfassend
- einen hohlzylinderförmigen Stator (1),
- einen im Stator (1) um eine Rotationsachse (2) drehbar gelagerten Rotor (3) und
- einen Wärmetauscher (4), welcher sich in axialer Richtung zumindest entlang der axialen Länge des Stators (1) erstreckt und welcher sich in Umfangsrichtung höchstens entlang der Hälfte des Umfangs des Stators (1) erstreckt, wobei mittels des Wärmetauschers (4) ein zur Kühlung des Stators (1) und/oder des Rotors (3) vorgesehenes, erstes Kühlmedium kühlbar ist,
**dadurch gekennzeichnet, dass**
der Wärmetauscher (4) Rohre (5) aufweist, durch welche ein zweites Kühlmedium im Wesentlichen in Umfangsrichtung führbar ist,
wobei der Wärmetauscher (4) zumindest abschnittsweise derart ausgestaltet ist, dass das erste Kühlmedium zwischen den Rohren (5) im Wesentlichen senkrecht zur axialen Richtung und senkrecht zu den Rohren (5) führbar ist.

2. Elektrische Maschine nach Anspruch 1,
wobei die elektrische Maschine derart ausgestaltet ist, dass das erste Kühlmedium fluiddicht vom zweiten Kühlmedium abgetrennt ist.

3. Elektrische Maschine nach einem der vorhergehenden Ansprüche,
wobei die elektrische Maschine ein Wärmetauschergehäuse (6) aufweist, welches in Umfangsrichtung einen mittigen (7) und zwei stirnseitige Umfangsabschnitte (8a, 8b) aufweist,
wobei der Wärmetauscher (4) im mittigen Umfangsabschnitt (7) angeordnet ist,
wobei die elektrische Maschine derart ausgestaltet ist, dass das zweite Kühlmedium
- an dem einem stirnseitigen Umfangsabschnitt (8a) einer ersten Stirnseite (11) der Rohre (5) zuführbar ist,
- von der ersten Stirnseite (11) der Rohre (5) im Wesentlichen in Umfangsrichtung durch die Rohre (5) zu einer zweiten Stirnseite (12) der Rohre (5) führbar ist und
- an dem anderen stirnseitigen Umfangsabschnitt (8b) von der zweiten Stirnseite (12) der Rohre (5) abführbar ist.

4. Elektrische Maschine nach Anspruch 3,
wobei die elektrische Maschine eine erste Strömungsmaschine (13) zur Umwälzung des zweiten Kühlmediums aufweist,
wobei die erste Strömungsmaschine (13) in dem einen stirnseitigen Umfangsabschnitt (8a) angeordnet ist.

5. Elektrische Maschine nach Anspruch 3 oder 4,
wobei die elektrische Maschine eine zweite Strömungsmaschine (14) zur Umwälzung des zweiten Kühlmediums aufweist,
wobei die zweite Strömungsmaschine (14) in dem anderen stirnseitigen Umfangsabschnitt (8b) angeordnet ist.

6. Elektrische Maschine nach Anspruch 4 und 5,
wobei die elektrische Maschine derart ausgelegt ist, dass bei einem Ausfall der ersten Strömungsmaschine (13) die zweite Strömungsmaschine (14) betrieben wird und umgekehrt.

7. Elektrische Maschine nach einem der Ansprüche 3-6,
wobei das Wärmetauschergehäuse (6) in dem einen stirnseitigen Umfangsabschnitt (8a) zumindest eine erste Öffnung (15) und in dem anderen stirnseitigen Umfangsabschnitt (8b) zumindest eine zweite Öffnung (16) aufweist,
wobei die erste Strömungsmaschine (13) zwischen der jeweiligen ersten Öffnung (15) und der ersten Stirnseite (11) der Rohre (5) angeordnet ist und/oder die zweite Strömungsmaschine (14) zwischen der jeweiligen zweiten Öffnung (16) und der zweiten Stirnseite (12) der Rohre (5) angeordnet ist.

8. Elektrische Maschine nach einem der Ansprüche 3-7,
wobei die elektrische Maschine ein im Wesentlichen quaderförmiges Gehäuse (17) aufweist, in welchem der Stator (1) und der Rotor (3) angeordnet sind,
wobei das Wärmetauschergehäuse (6) in radialer Richtung an eine der Seitenflächen (18) des quaderförmigen Gehäuses (17) anschließend angeordnet ist.

9. Elektrische Maschine nach einem der vorhergehenden Ansprüche,
wobei der Wärmetauscher (4) in axialer Richtung einen mittigen (19) und zwei stirnseitige Axialabschnitte (20a, 20b) aufweist,
wobei die elektrische Maschine derart ausgestaltet ist, dass das erste Kühlmedium
- vom Rotor (3) und/oder vom Stator (1) im Wesentlichen nach radial außen durch den mittigen Axialabschnitt (19) zu einer Außenseite (21) des mittigen Axialabschnitts (19) führbar ist,
- von der Außenseite (21) des mittigen Axialabschnitts (19) im Wesentlichen in axialer Richtung zu einer Außenseite (22) des jeweiligen stirnseitigen Axialabschnitts (20a, 20b) führbar ist und
- von der Außenseite (22) des jeweiligen stirnseitigen Axialabschnitts (20a, 20b) im Wesentlichen nach radial innen durch den jeweiligen stirnseitigen Axialabschnitt (20a, 20b) zu einer jeweiligen Stirnseite (23) des Rotors (3) und/oder des Stators (1) führbar ist.

10. Elektrische Maschine nach Anspruch 9,
der Wärmetauscher (4) jeweilige Trennelemente (24) aufweist, mittels derer das durch den mittigen Axialabschnitt (19) strömende erste Kühlmedium vom durch den jeweiligen stirnseitigen Axialabschnitt (20a, 20b) strömenden ersten Kühlmedium abtrennbar ist.

11. Elektrische Maschine nach Anspruch 9 oder 10,
wobei die elektrische Maschine eine dritte Strömungsmaschine (25) zur Umwälzung des ersten Kühlmediums aufweist,
wobei die dritte Strömungsmaschine (25) in radialer Verlängerung der Außenseite (21) des mittigen Axialabschnitts (19) angeordnet ist.

12. Elektrische Maschine nach einem der Ansprüche 9-11,
wobei die elektrische Maschine eine jeweilige vierte Strömungsmaschine (26) zur Umwälzung des ersten Kühlmediums aufweist,
wobei die jeweilige vierte Strömungsmaschine (26) in radialer Verlängerung der Außenseite (22) des jeweiligen stirnseitigen Axialabschnitts (20a, 20b) angeordnet ist.

13. Elektrische Maschine nach Anspruch 11 und 12,
wobei die elektrische Maschine derart ausgelegt ist, dass bei einem Ausfall der dritten Strömungsmaschine (25) die jeweilige vierte Strömungsmaschine (26) betrieben wird und umgekehrt.

14. Elektrische Maschine nach einem der Ansprüche 9-13,
wobei die elektrische Maschine eine jeweilige Leitvorrichtung (27) aufweist, mittels welcher jeweils das erste Kühlmedium zu einer jeweiligen Stirnseite (23) des Rotors (3) und/oder des Stators (1) führbar ist.

15. Elektrische Maschine nach einem der vorhergehenden Ansprüche,
wobei die elektrische Maschine mit einer elektrischen Leistung von zumindest 1 MW, insbesondere mehr als 3 MW, betreibbar ist,
wobei die elektrische Maschine eine Achshöhe von zumindest 500 mm, insbesondere mehr als 630 mm, aufweist, und/oder wobei die elektrische Maschine als Generator, insbesondere Windkraftgenerator, oder als Antriebsmotor für einen Pumpenantrieb, einen Kompressorantrieb oder einen Stahlwerksantrieb ausgestaltet ist.
